# EUROPÄISCHE PATENTSCHRIFT

(11) **EP 2 140 506 B1**
(45) Veröffentlichungstag und Bekanntmachung des Hinweises auf die Patenterteilung: **07.01.2015**
(21) Anmeldenummer: 08717659.0
(22) Anmeldetag: 12.03.2008
(51) Int. Cl.: H02N 2/06, F02D 41/20

(54) **VERFAHREN UND VORRICHTUNG ZUM LADEN EINES KAPAZITIVEN ELEMENTES**
METHOD AND DEVICE FOR CHARGING A CAPACITIVE ELEMENT
PROCÉDÉ ET DISPOSITIF DE CHARGEMENT D'UN ÉLÉMENT CAPACITIF

(30) Priorität: 26.03.2007 DE 102007014326
(43) Veröffentlichungstag der Anmeldung: 06.01.2010
(73) Patentinhaber: Robert Bosch GmbH, 70442 Stuttgart (DE)
(72) Erfinder: FUCHS, Stefan, 70469 Stuttgart (Feuerbach) (DE); GRAF, Marco, 71254 Ditzingen (DE)
(86) Internationale Anmeldenummer: PCT/EP2008/052913
(87) Internationale Veröffentlichungsnummer: WO 2008/116749

(56) Entgegenhaltungen:
- WO-A-01/33061
- WO-A-2005/083251
- DE-A1-102004 054 109
- DE-A1-102005 054 680

## Beschreibung

### STAND DER TECHNIK

Die vorliegende Erfindung betrifft Verfahren und Vorrichtungen zum Laden eines kapazitiven Elementes auf eine vorgegebene Ladespannung, wobei dem kapazitiven Element ein Ladestrom eingekoppelt wird.

In vielfältigen elektrotechnischen Anwendungen ist es notwendig, kapazitive Elemente, wie beispielsweise Kondensatoren, aber auch spezielle Kapazitäten aufweisende Aktoren, wie insbesondere Piezo-Aktoren, anzusteuern und vor der eigentlichen Ansteuerung vorzuladen. Beispielsweise werden kapazitive Stellglieder, wie Piezo-Aktoren als Ventilelemente in Einspritzsystemen für Brennkraftmaschinen in Kraftfahrzeugen eingesetzt, da diese präzise ansteuerbar sind und eine verbrauchsgünstige Kraftstoffeinspritzung in die entsprechende Brennkammer ermöglichen.

Eine Ansteuerschaltung, die auch einfache Verfahren zum Laden und Entladen von Piezo-Aktoren ermöglicht, ist zum Beispiel in der DE 10 2004 037 720 A1 dargestellt. Der beim Laden von Piezo-Stellgliedern auftretende Ladestrom muss in der Regel begrenzt werden, um nicht die eingesetzten Halbleiter-Bauelemente zu beschädigen. Daher ergibt sich meist ein gepulster Ladestrom durch Ein- und Ausschalten einer Ladestromquelle bis die gewünschte Ladespannung erreicht ist. Nachdem eine gewünschte Ladespannung des entsprechenden Piezo-Aktors eingetreten ist, kann dieser als Stellglied aktiviert werden, um beispielsweise eine Ventilöffnung freizugeben. Es ist dabei wünschenswert, den zeitlichen Ladespannungsverlauf im Betrieb möglichst präzise bestimmen zu können, um die Kraftstoffeinspritzung für den entsprechenden Motor effizienzgünstig vornehmen zu können.

Aus der WO 01/33061 A ist ein Verfahren und eine Vorrichtung zur Ansteuerung eines Piezoaktors bekannt. Der Piezoaktor wird von einer als Fly-Back-Konverter ausgebildeten Endstufe angesteuert. Dabei ist eine Lade- und/oder eine Entlade Vorrichtung mit einem Schalttransistor vorgesehen. Der Schalttransistor wird mit einem pulsweiten-modulierten Signal in seinen leitenden Zustand geschaltet. Das Tastverhältnis wird so bestimmt, dass der Schalttransistor so lange leitend bleibt, bis ein am Transistor gemessener Stromwert einem variablen Referenzstromwert entspricht.

Die DE 10 2005 054 680 A1 zeigt eine Vorrichtung und ein Verfahren zur Ansteuerung eines Piezoaktors. Die Treiberschaltung soll Geräusche unterdrücken. Ein Ladeschalter wird auf Basis eines Einspritzsignals zur Steuerung der Aufladung des Piezoaktors synchron mit dem hohem Pegel und dem niederen Pegel einer Bezugsspannungsquelle periodisch ein- und ausgeschaltet. Der dem Piezoaktor zugeführte Elektrizitätsbeitrag wird für eine bestimmte Periode überwacht. Dabei erfolgt eine Überwachung derart, dass der Elektrizitätsbeitrag einen bestimmten Schwellenwert nicht übersteigt, wobei dieser zweistufig geändert werden kann.

Ferner zeigt die DE 10 2004 054 109 A1 eine Vorrichtung und ein Verfahren zur Ansteuerung eines Piezoaktors. Bei dieser wird das Entladen des Piezoaktors speziell gesteuert.

Es ist daher eine Aufgabe der vorliegenden Erfindung, ein verbessertes Verfahren und Vorrichtungen zum Laden eines kapazitiven Elementes auf eine Ladespannung zu schaffen.

### OFFENBARUNG DER ERFINDUNG

Diese Aufgabe wird durch ein Verfahren gemäß Patentanspruch 1, ein Computerprogramm gemäß Patentanspruch 8 und eine Vorrichtung gemäß Patentanspruch 9 gelöst.

Die Vorrichtung eignet sich dabei insbesondere zur Ausführung des Verfahrens zum Laden und/oder Entladen eines kapazitiven Elementes mittels eines Ladestroms bzw. Entladestroms. Dabei wird ein steuerbarer Schalter zum Unterbrechen des Ladestroms angesteuert, wenn der Ladestrom eine vorbestimmte Ladestromschwelle überschreitet. Die Ladestromschwelle wird verändert, während das kapazitive Element auf die vorgegebene Ladespannung geladen wird. Der steuerbare Schalter wird erneut zum Einkoppeln des Ladestroms in das kapazitive Element angesteuert, falls ein vorgegebener Zeitraum nach einem vorhergehenden Ansteuern des steuerbaren Schalters abgelaufen ist, und/oder falls der Ladestrom die vorgegebene Ladestromschwelle unterschreitet.

Durch das Verändern der Ladestromschwelle lässt sich durch das Steuern des Ladestroms, der einen gepulsten zeitlichen Verlauf haben kann, der Verlauf der resultierenden Ladespannung an dem kapazitiven Element flexibel den Anforderungen, z. B. bei der Verwendung des kapazitiven Elementes als Piezo-Aktor, anpassen. In einem Ladezyklus, der beispielsweise mehrfaches Ansteuern des steuerbaren Schalters umfasst, ergibt sich ein Ladestrom, der die variable Stromschwelle mehrfach über- und unterschreitet und daher einen gepulsten Ladestrom darstellt. In der Regel weist ein realistischer steuerbarer Schalter eine Einschalt- und Ausschaltverzögerung auf, sodass beim Ansteuern des Schalters keine instantane Stromänderung eintritt, sondern ein Über- und Unterschreiten der Ladestromschwelle auftritt. Das mehrfache Ansteuern kann z. B. solange wiederholt werden, bis eine vorgegebene maximale Ladezykluszeit abgelaufen ist, oder die vorgegebene Ladespannung an dem kapazitiven Element anliegt. Die Ladestromschwelle kann auch als Ladestromgrenze bezeichnet werden.

Analog dem Ladevorgang lässt sich auch ein Entladen von einer Anfangsladespannung des kapazitiven Elementes auf eine niedrigere Ladespannung, z. B. von 0 V durchführen. Dabei wird der Absolutwert des entsprechenden Entladestroms mit der entsprechenden Entladestromschwelle verglichen und es erfolgt eine gepulste Entladung des kapazitiven Elementes.

Bei der Durchführung des Verfahrens sind einer oder mehrere der folgenden Verfahrensschritte denkbar: Bereitstellen des Ladestroms durch eine Ladestromquelle; Erzeugen eines oder mehrerer Steuersignale zum Ansteuern des steuerbaren Schalters; Erfassen des Ladestroms durch geeignete Messsignale; Vergleichen des Ladestroms mit der Ladestromschwelle; Erfassen der abgelaufenen Zeit ab jedem Ansteuern des steuerbaren Schalters als Lückenzeit, dabei kann die Lückenzeit als Intervall zwischen dem Über- oder Unterschreiten der Ladestromschwelle durch den erfassten Ladestrom aufgefasst werden; Erfassen der Gesamtzeit eines Ladezyklus; Erzeugen mindestens eines Kontrollsignals, z. B. zur Übergabe an eine Motorsteuerung.

In einer Ausführungsform der Erfindung ist das Verfahren als Computerprogramm implementiert, welches eine programmgesteuerte Rechenvorrichtung zur Ausführung desselben veranlasst. Dabei ist es z. B. denkbar, das Computerprogramm auf einem Speichermedium wie Flash, Floppy, ROM oder anderen gängigen Speichermedien vorzuhalten. Es kann ebenfalls in einer anwendungsangepassten oder anwendungsspezifischen integrierten Schaltung implementiert werden. In einer Ausführungsform der Erfindung wird die Vorrichtung zum Laden eines kapazitiven Elementes zum Beispiel als Regelungseinrichtung für eine Kraftstoffeinspritzung eines Kraftfahrzeugmotors ausgeführt, wobei mehrere Ventilstellglieder als kapazitive Elemente mit jeweils einem weiteren zugeordneten steuerbaren Schalter zur Auswahl desselben vorgesehen sind.

Weitere Ausführungsbeispiele der Erfindung sind Gegenstand der Unteransprüche sowie der im Folgenden beschriebenen Beispiele.

### KURZE BESCHREIBUNG DER ZEICHNUNGEN

Die vorliegende Erfindung wird nachfolgend anhand einiger Ausführungsbeispiele und der beigefügten Figuren näher erläutert. Dabei zeigt die
Fig. 1: Eine schematische Schaltungsanordnung zur Erläuterung der auftretenden Spannungen und Ströme;
Fig. 2: Eine schematische Schaltungsanordnung zum Laden und Entladen eines Piezo-Aktors;
Fig. 3: Schematische Verläufe von Ladeströmen und Spannungen eines kapazitiven Elementes; und
Fig. 4: Ein Beispiel für den zeitlichen Ablauf eines erfindungsgemäß gesteuerten Ladestroms.

In den Figuren sind gleiche bzw. funktionsgleiche Elemente mit denselben Bezugszeichen versehen worden, sofern nichts anderes angegeben worden ist.

### AUSFÜHRUNGSFORMEN DER ERFINDUNG

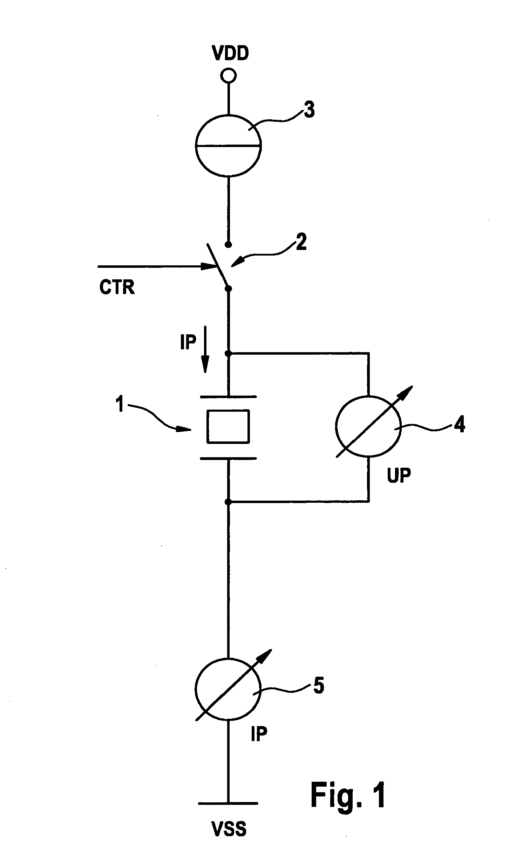

Die Fig. 1 zeigt eine schematische Schaltungsanordnung zur Verdeutlichung der auftretenden Ströme und Spannungen beim Laden und/oder Entladen eines kapazitiven Elementes. Die Fig. 1 zeigt ein kapazitives Element 1, welches beispielhaft als Piezo-Stellglied dargestellt ist, in das ein Ladestrom IP eingekoppelt werden kann. Dazu sind eine Ladestromquelle 3, ein steuerbarer Schalter 2 und das Piezo-Element 1 seriell zwischen einem ersten elektrischen Potenzial VDD und einem zweiten elektrischen Potenzial VSS geschaltet. Der steuerbare Schalter 2 ist durch ein Steuersignal CTR ansteuerbar. Als steuerbarer Schalter kommen beispielsweise Schalttransistoren, Treiberschaltungen oder andere bekannte Einrichtungen infrage, die das Koppeln und Entkoppeln von Strömen ermöglichen.

Es ist ferner beispielhaft eine Spannungsmesseinrichtung 4 dargestellt, die an dem Piezo-Element 1 anliegende Ladespannung UP erfasst. Eine Strommesseinrichtung 5, welche zwischen dem zweiten elektrischen Potenzial VSS und dem Piezo-Element vorgesehen ist, erfasst den aktuellen Ladestrom IP. Um das Piezo-Element 1 auf eine vorgegebene Ladespannung zu bringen, wird ihm durch Schließen des steuerbaren Schalters 2 ein Ladestrom eingekoppelt, der durch mehrfaches Ansteuern des steuerbaren Schalters 2 beispielsweise zeitlich pulsierend eingestellt werden kann. Nachdem die gewünschte Ladespannung UP des Piezo-Elementes 1 erreicht ist, oder eine vorgegebene maximale Zeit für die Dauer dieses Ladezyklus überschritten ist, wird der Ladevorgang beendet.

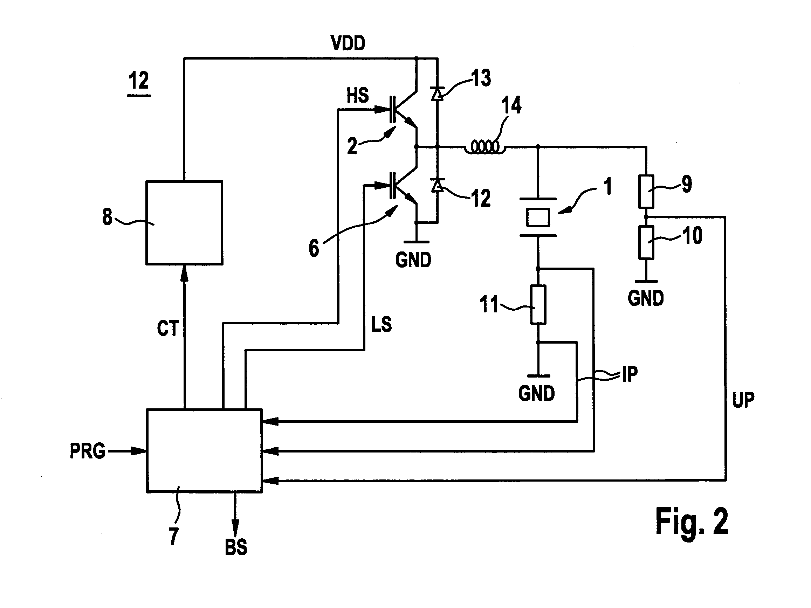

In der Fig. 2 ist ein weiteres schematisches Ausführungsbeispiel einer Vorrichtung zum Laden oder Entladen eines kapazitiven Elementes schematisch dargestellt. In der Vorrichtung gemäß der Fig. 2 ist eine Steuereinrichtung 7 vorgesehen, welche beispielsweise als applikationsangepasste integrierte Schaltung ausgeführt sein kann (ASIC = application specific integrated circuit) die über Steuersignale HS, LS steuerbare Schalter 2, 6 ansteuert, welche beispielsweise als Schalttransistoren ausgeführt sind.

Es ist lediglich beispielhaft ein einzelnes kapazitives Element 1 als Piezo-Aktor vorgesehen, das über eine Drosselspule 14 an einen Leitungsknoten zwischen den steuerbaren Strecken der Schalttransistoren 2, 6 verbunden ist und über einen Widerstand 11 an Masse geschaltet ist. Die Drosselspule 14 dient dabei der Strombegrenzung. Es kann anstelle des Masseanschluss GND auch ein beliebiges Potenzial VSS gewählt werden. Ferner sind zwei Freilaufdioden 12, 13 den steuerbaren Strecken der Transistoren 2, 6 parallel geschaltet. Über den Widerstand 11 lässt sich der Ladestrom IP des Piezo-Aktors bestimmen und als Messsignale der Steuereinrichtung 7 zuführen. An den Ladungsknoten zwischen den steuerbaren Strecken der Schalttransistoren 2, 6 ist ebenfalls ein Spannungsteiler 9, 10 an Masse gekoppelt, wobei zwischen den Widerständen 9, 10 eine Ladespannung UP des Piezo-Aktors 1 abgreifbar ist, bzw. ein Messsignal UP erfasst werden kann, welches auf die Ladespannung schließen lässt. Dieses Messsignal UP ist ebenfalls der Steuereinrichtung 7 zugeführt.

Die steuerbare Strecke des ersten Schalttransistors 2 ist zwischen dem Piezo-Element 1 und einer Spannungsversorgung 8 geschaltet, wobei die Spannungsversorgung 8 beispielsweise als gesteuerter Gleichspannungswandler ausgeführt sein kann, welcher eine Versorgungsspannung VDD liefert. Die steuerbare Strecke des zweiten Steuertransistors 6 ist zwischen dem Piezo-Element 1 und Masse GND geschaltet. Durch gesteuertes Schließen des ersten steuerbaren Schalters 2, also des ersten Transistors mittels dem Steuersignal HS kann ein Ladestrom in den Piezo-Aktor 1 eingekoppelt werden. Andererseits lässt sich durch Öffnen des ersten steuerbaren Schalters 2, also derartiges Ansteuern des Transistors 2, dass dessen steuerbare Strecke hochohmig ist, und gleichzeitiges Ansteuern des zweiten steuerbaren Schalters 6 über das Steuersignal LS derart, dass die steuerbare Strecke des zweiten Transistors niedrigohmig ist, ein Entladen des Piezo-Aktors 1 erreichen.

Die Steuereinrichtung 7 kann z. B. als Teil einer Regelungseinrichtung für die Kraftstoffeinspritzung eines Kraftfahrzeugmotors verstanden werden, wobei das hier beispielhaft einzeln dargestellte Piezo-Element 1 als Ventilstellglied verwendet wird. Es ist eine Erweiterung der Schaltungsanordnung 12 denkbar, bei der parallel weitere einzeln, z. B. über Auswahlschalter, ansteuerbare Piezo-Stellglieder vorgesehen sind, deren jeweilige Ladestromstärke IP von der Regelungseinrichtung bzw. Steuereinrichtung erfassbar und regelbar sind. Im Folgenden wird die Steuerung des Lade- bzw. Entladevorgangs des Piezo-Aktors 1 näher erläutert.

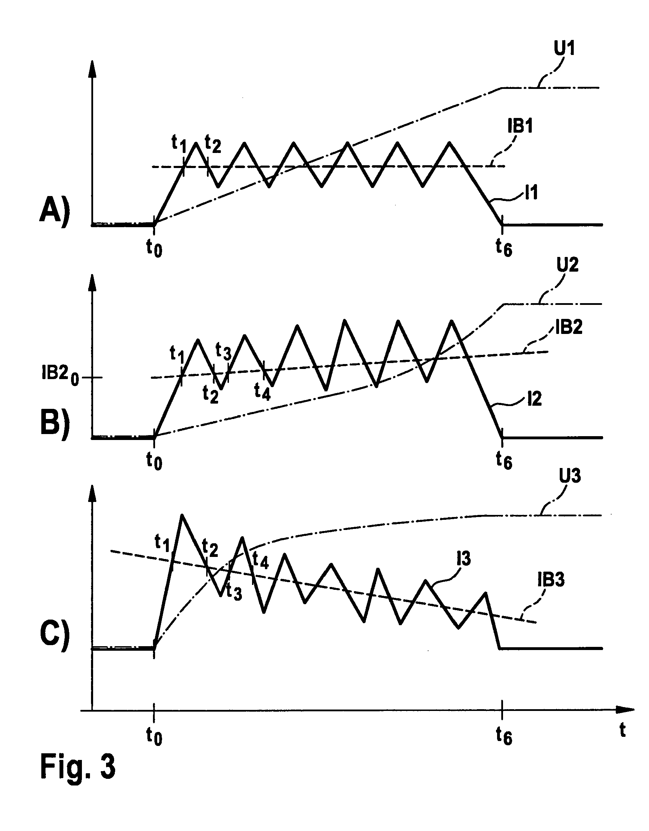

Dazu sind in der Fig. 3 mehrere Strom- und Spannungsverläufe von Ladeströmen und Ladespannungen dargestellt.

Die Fig. 3A zeigt den zeitlichen Verlaufs eines Ladestroms I1 (durchgezogenen Kurve) sowie eine sich ergebenden Ladespannung U1 (gestrichpunktete Kurve), wobei eine feste Ladestromschwelle IB1 (gestrichelte Kurve) gewählt ist. Zum Zeitpunkt t₀ wird zunächst der Ladestrom in das Piezo-Element eingekoppelt. Soweit dieser zum Zeitpunkt t₁ eine fest vorgegebene Ladestromschwelle überschreitet, wird ein steuerbarer Schalter unterbrochen, um den Ladestrom zu begrenzen. Allerdings ergibt sich durch die Trägheit des Schalters zunächst ein weiteres Ansteigen des Ladestroms, bis dieser abfällt und die feste Ladestromschwelle IB1 zum Zeitpunkt t₂ unterschreitet. Dabei kann auch die Drosselspule 14 strombegrenzend wirken. Daraufhin wird der jeweilige steuerbare Schalter, z. B. der Schalter des Transistors 2 in der Fig. 2 geschlossen, sodass nach einer gewissen Einschaltverzögerung der Ladestrom wieder ansteigt. Bei der Verwendung einer festen Ladestromschwelle IB1, wie es in der Fig. 3A dargestellt ist, ergibt sich im Wesentlichen ein linearer Ladespannungsanstieg U1 durch den gepulsten Ladestrom I1. Der Vorgang wird solange wiederholt, bis eine gewünschte Spannung erreicht ist oder eine vorgegebene maximale Ladezeit abgelaufen ist. Zum Beispiel zu einem Zeitpunkt t₆ ist die gewünschte vorgegebene Ladespannung U1 erreicht, und es wird der Ladestrom unterbrochen, sodass dieser wieder auf praktisch 0 zurückgeht. Die vorgegebene Ladespannung kann zum Beispiel bis zu 200V betragen.

In einer Ausführungsform der Ansteuerung bzw. des Verfahrens zum Laden oder Entladen wird nun die Ladestromschwelle während des von t₀ bis t₆ dauernden Ladezyklus verändert. In der Fig. 3B ist eine Ladestromschwelle IB2 dargestellt, die im Verlauf des Aufladens durch das wiederholte Einkoppeln und Unterbrechen des Ladestroms I2 in das Piezo-Element 1 ansteigt. Der Anstieg kann beispielsweise durch Vorgabe einer Anfangsladestromschwelle IB2₀ und einer Steigung für den Verlauf vorgegeben werden, welche in der Fig. 3B positiv ist. Durch die veränderliche Ladestromschwelle IB2 ergibt sich ein gegenüber der Fig. 3A veränderter Spannungsverlauf der Ladespannung U2. Die Ladespannung U2, welche durch den Spannungsteiler 9, 10 von der Steuereinrichtung 7 gemessen wird, hat einen deutlichen nicht-linearen Verlauf.

Ein weiterer Verlauf von Ladestrom I3 und Ladespannung U3 ist in der Fig. 3C dargestellt, wobei die Steigung der variablen Ladestromschwelle IB3 negativ ist, sodass die sich ergebenden Maxima im Ladestrom im Laufe des Ladezyklus zwischen t₀ und t_{6,} also bis die vorgegebene gewünschte Ladespannung U3 erreicht ist, absinken. Bei KFZ-Anwendungen, also dem Einsatz des Verfahrens zum Laden bzw. Vorladen des kapazitiven Elementes 1 auf eine vorgegebene Ladespannung sind Zeiträume t₆ - t₀ von 100-150 Mikrosekunden üblich, wobei beispielsweise 10 Über- und Unterschreitungen der Ladestromschwellen auftreten können.

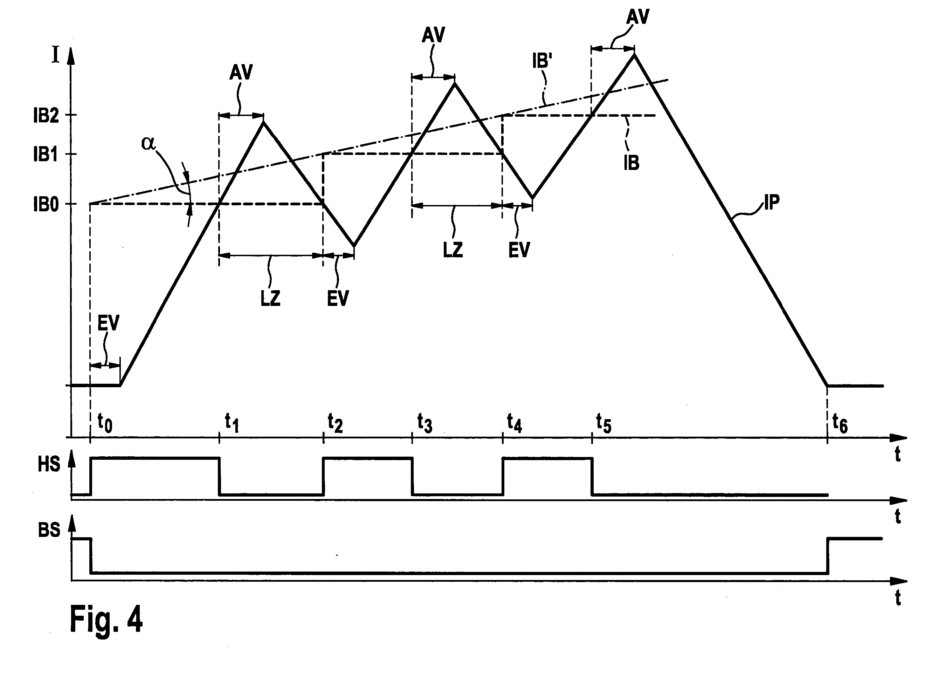

Der Ladestromverlauf zwischen einem jeweiligen Über- und Unterschreiten der Ladestromschwelle, beispielsweise zwischen t₁ und t₂ wird auch als (Lade- oder Entlade-) Stromdreieck bezeichnet. Den Einfluss der Ein- und Ausschaltverzögerung von steuerbaren Schaltern auf den Verlauf des Ladestroms lässt sich anhand der Fig. 4 näher erkennen.

Die Fig. 4 zeigt den Verlauf eines Ladestroms IP, wie er beispielsweise in der Vorrichtung 12 der Fig. 2 auftreten kann. Es ist eine veränderliche Stromschwelle IB vorgesehen, die einen stufenweisen Verlauf hat. Der stufenweise zeitliche Verlauf der Stromschwelle IB kann sich z. B. durch die Quantisierung eines vorgegebenen kontinuierlichen Verlaufes IB' der Stromschwelle ergeben, falls eine digitale Steuerung der Strom- und Spannungsdaten bei der Einrichtung 7 erfolgt, und daher eine Digital-Analog-Wandlung und Analog-Digital-Wandlung der kontinuierlich vorliegenden Strom- und Spannungsmessungen erfolgen muss.

Die Fig. 4 zeigt zunächst einen Stromverlauf IP, die möglichen Ansteuersignale HS für den steuerbaren Schalter 2 bzw. Transistor 2, sowie ein Anzeigesignal BS, das die Steuereinrichtung 7 ausgibt, um weiteren Einrichtungen, beispielsweise der Motorsteuerung des Fahrzeugs, die Dauer des Ladezyklus anzuzeigen. Mit EV ist die zeitliche Einschaltverzögerung des Transistors 2 angegeben, mit AV die entsprechende Ausschaltverzögerung und mit LZ die Lückenzeit, welche den Zeitraum zwischen dem Ansteuern zum Öffnen und Schließen des Transistors 2 bezeichnet.

Zum Zeitpunkt t₀ startet die Steuereinrichtung 7 den Ladezyklus und setzt beispielsweise das Steuersignal HS zum Ansteuern bzw. Öffnen des Schalttransistors 2 auf logischen H-Pegel. Der Transistor 2 schaltet somit durch. Die Steuereinrichtung 7 hat beispielsweise in programmierter Form den zeitlichen Verlauf der Ladestromschwelle abgespeichert oder erhält diese z. B. von der Motorsteuerung über ein Programmiersignal PRG in Form eines Anfangswertes IB0 und einer Steigung. Nach der Einschaltverzögerung EV des Transistors 2 steigt der Ladestrom IP an und überschreitet zum Zeitpunkt t₁ die Ladestromschwelle IB. Die Steuereinrichtung 7 erkennt das Überschreiten der Ladestromschwelle zum Zeitpunkt t₁ und setzt das Steuersignal HS für den Schalttransistor 2 auf logisch 0. Gleichzeitig beginnt die Lückenzeit LZ, welche von der Steuereinrichtung 7 erfasst bzw. vorgegeben wird.

Durch die Trägheit des Schalttransistors 2 erfolgt ein weiterer kurzer Anstieg des Ladestroms, welcher dann abfällt und zum Zeitpunkt t₂ erneut die Ladestromschwelle IB unterschreitet, was von der Steuereinrichtung 7 registriert wird. In dem erfindungsgemäßen Ausführungsbeispiel wird die Ladestromschwelle IB jeweils beim Unterschreiten des Ladestromes der aktuellen Ladestromschwelle, die in dem ersten Ladedreieck zwischen t₁ und t₂ noch IB0 beträgt, verändert. Zum Zeitpunkt t₂ setzt die Steuereinrichtung 7 die Ladestromschwelle daher auf den quantisierten Wert IB1 hoch, der sich aus der Steigung α von IB', der abgelaufenen Zeit t₂ und dem Anfangswert IB0 gemäß IB(t₂)=IB0+ (t₂-t₀)·α ergibt. Nach einer kurzen erneuten Einschaltverzögerung EV steigt der Ladestrom nun an und überschreitet zum Zeitpunkt t₃ erneut die aktuelle Ladestromschwelle IB, woraufhin wie bei dem ersten Ladedreieck zwischen t₁ und t₂ der Beginn der Lückenzeit erfasst wird und das Ansteuersignal HS für den Steuerschalter 2 angepasst wird bzw. auf logischen L-Pegel gesetzt wird.

Nach erneutem Unterschreiten der Ladestromschwelle IB wird diese aktualisiert und auf den Wert IB2 gesetzt. Zum Zeitpunkt t₅ überschreitet der Ladestrom IP erneut die aktuelle Ladestromschwelle IB, sodass der steuerbare Schalter 2 erneut unterbrochen wird. Der Ladezyklus ist z. B. dann vollständig beendet, wenn entweder eine vorgegebene maximale Zykluszeit abgelaufen ist, oder die vorgegebene Ladespannung von zum Beispiel 200V erreicht wurde. Dies kann beispielsweise in der Fig. 4 nach dem Zeitpunkt t₅ der Fall sein, sodass der Transistor 2 in darauffolgenden Zeiten des Ladezyklus nicht erneut geschlossen wird und das Steuersignal HS nach t₅ auf logischem L-Pegel verbleibt. Der Ladezyklus ist zum Zeitpunkt t₆ abgeschlossen, wenn der Ladestrom im Wesentlichen auf Null zurückgegangen ist. Die Dauer des Ladezyklus wird durch das Signal BS angezeigt.

Es ist ferner denkbar, dass nicht ausschließlich das Unterschreiten der jeweils aktuellen Ladestromschwelle ein erneutes Einkoppeln des Ladestroms durch Schließen des Transistors 2 bedingt, sondern ferner eine Überprüfung vorgenommen wird, ob die eine Lückenzeitschwelle, also eine maximale Dauer des kontinuierlichen Einkoppelns des Ladestroms abgelaufen ist. Als Bedingung für ein erneutes Einschalten des Schalters 2 muss dann ein Unterschreiten der Stromschwelle und der Ablauf der vorgegebenen Lückenzeitdauer gegeben sein.

Durch die veränderliche Ladestromschwelle ergibt sich, wie bereits in der Fig. 3 dargestellt ist, ein nichtlinearer Verlauf der Ladespannung, sodass z. B. in bestimmten Betriebssituationen des Kraftfahrzeugs die Kraftstoffeinspritzung genauer erfolgen kann. Bei einer positiven Steigung der sich verändernden Ladestromschwelle IB erfolgt beispielsweise zunächst ein geringerer Anstieg in der Ladespannung, während gegen Ende des Ladezyklus ein steilerer Anstieg erfolgt. Andererseits kann, wie in der Fig. 3C dargestellt ist, eine sich gegen Ende des Ladezyklus zeitlich eher schwach verändernde Ladespannung ergeben, welche in bestimmten Situationen für die Einstellung der Zündzeitpunkte des Motors günstiger sein kann. Obwohl die Erfindung anhand einzelner Ausführungsbeispiele näher erläutert wurde, ist sie nicht darauf beschränkt, sondern vielfältig modifizierbar. Insbesondere ist sie nicht nur auf ein Laden eines Piezo-Aktors beschränkt, sondern kann vielfältig bei anderen kapazitiven Elementen eingesetzt werden. Analog den dargestellten Kurven für einen Ladevorgang ergibt sich auch durch eine veränderliche Entladestromschwelle beim entsprechenden Entladevorgang eine günstigere zeitliche Veränderung der Entladespannung. Beim Entladevorgang wird, wie es entsprechend anhand des Beispiels der Fig. 2 erläutert wurde, der zweite Schalttransistor 6 angesteuert, um einen Entladestrom auf Masse fließen zu lassen. Prinzipiell ergeben sich jedoch dieselben Vorgänge wie beim Laden, sofern in den Figuren ein negativer Entladestrom, also ein Entladen des Piezo-Elementes angenommen wird und der Vergleich mit den Stromschwellen unter Berücksichtigung des Absolutwertes des erfassten Ladestromes geschieht. Neben der Anwendung des Lade- bzw. Entladeverfahrens in Kraftstoffeinspritzsystemen, wobei ein Piezo-Aktor als Ventilstellelement verwendet wird, sind ferner weitere Anwendungsbereiche denkbar. Denkbar ist auch ein Verändern der jeweiligen Ladestromschwelle derart, dass eine maximale und minimale Stromgrenze vorgegeben wird, sodass ein Stromschwellenbereich vorgegeben wird innerhalb dessen eine Veränderung während des Ladens oder Entladens des kapazitiven Elements erfolgt.

## Patentansprüche

1. Verfahren zum Laden eines kapazitiven Elementes (1) auf eine vorgegebene Ladespannung (UP) mittels eines Ladestroms (IP), wobei ein steuerbarer Schalter (2) zum Unterbrechen des Ladestroms (IP) angesteuert wird, falls der Ladestrom (IP) eine vorbestimmte Stromschwelle (IB) überschreitet und der steuerbare Schalter (2) zum Einkoppeln des Ladestroms (IP) erneut angesteuert wird, falls ein vorgegebener Zeitraum (LZ) nach einem vorhergehenden Ansteuern des steuerbaren Schalters (2) abgelaufen ist und/oder der Ladestrom (IP) die vorbestimmte Ladestromschwelle (IB) unterschreitet, und wobei die Ladestromschwelle (IB) verändert wird, während das kapazitive Element (1) auf die vorgegebene Ladespannung (VP) geladen wird, **dadurch gekennzeichnet, dass** ein Ändern der Ladestromschwelle (IB) dann erfolgt, wenn der Ladestrom (IP) nach einem ersten Ansteuern des steuerbaren Schalters (2) ansteigt und bei einem darauf folgenden zweiten Ansteuern des steuerbaren Schalters (2) unter die Ladestromschwelle (IB) gesunken ist.

2. Verfahren nach Anspruch 1, **dadurch gekennzeichnet, dass** der steuerbare Schalter (2), bis das kapazitive Element (1) die vorgegebene Ladespannung (UP) erreicht, mehrfach derart angesteuert wird, dass der Ladestrom (IP) mehrfach die Ladestromschwelle (IB) überschreitet und unterschreitet.

3. Verfahren nach einem der Ansprüche 1 - 2, **dadurch gekennzeichnet, dass** die Ladestromschwelle (IB) in vorgegebenen Stufen verändert wird.

4. Verfahren nach einem der Ansprüche 1 - 3, **dadurch gekennzeichnet, dass** das Ändern der Ladestromschwelle (IB) in Abhängigkeit von einem vorgegebenen Anfangswert (IB0) und einer vorgegebenen Steigung (α) der Ladestromschwelle (IB) erfolgt.

5. Verfahren nach einem der Ansprüche 1 - 4, **dadurch gekennzeichnet, dass** das Ansteuern des steuerbaren Schalters (2) solange wiederholt wird, bis eine vorgegebene Ladezykluszeit abgelaufen ist und/oder das kapazitive Element (1) die vorgegebene Ladespannung (UP) erreicht hat.

6. Verfahren nach einem der Ansprüche 1 - 5, **dadurch gekennzeichnet, dass** die vorgegebene Ladespannung (UP) niedriger ist als eine aktuelle Ladespannung des kapazitiven Elementes (1), wobei ein Absolutwert des Ladestroms mit der Ladestromschwelle verglichen wird und durch das Verfahren eine gepulste Entladung des kapazitiven Elementes (1) erfolgt.

7. Verfahren nach einem der Ansprüche 1 - 6, **dadurch gekennzeichnet, dass** einer oder mehrere der folgenden Verfahrensschritte ausgeführt werden:
- Bereitstellen eines Ladestroms durch eine Ladestromquelle (3).
- Ansteuern des steuerbaren Schalters (2) zum Einkoppeln des von der Ladestromquelle (3) bereitgestellten Ladestroms an das kapazitive Element (1).
- Erzeugen eines Steuersignals (HS, LS) zum Ansteuern des steuerbaren Schalters (2).
- Erfassen des Ladestroms oder Entladestroms.
- Vergleichen des Ladestroms (IP) mit der Ladestromschwelle (IB).
- Erfassen der abgelaufenen Zeit ab jedem Ansteuern des steuerbaren Schalters (2) als
Lückenzeit (LZ).
- Vergleichen der Lückenzeit (LZ) mit einer vorgegebenen Lückenzeitschwelle.
- Erfassen einer abgelaufenen Ladezykluszeit.
- Erzeugen eines Kontrollsignals (BS).

8. Computerprogramm, welches eine programmgesteuerte Rechenvorrichtung zur Ausführung eines Verfahrens nach einem der Ansprüche 1 - 7 veranlasst.

9. Vorrichtung (12) zum Laden oder Entladen eines kapazitiven Elementes (1) auf eine vorgegebene Ladespannung (UP) oder Entladespannung mittels eines eingekoppelten Ladestroms (IB) oder Entladestroms mit einer Steuerschaltung (7), insbesondere einer anwendungsangepassten integrierten Schaltung (ASIC), welche ein Verfahren nach mindestens einem der Ansprüche 1-7 ausführt.

10. Vorrichtung (12) nach Anspruch 9, **dadurch gekennzeichnet, dass** das kapazitive Element (1) ein Stellglied, insbesondere ein Piezo-Stellglied, aufweist.

11. Vorrichtung (12) nach Anspruch 9 oder 10, **dadurch gekennzeichnet, dass** der steuerbare Schalter (2) eine vorgegebene Einschalt- und/oder Ausschaltverzögerung (EZ, AZ) aufweist.

12. Vorrichtung (12) nach einem der Ansprüche 9 - 11, **dadurch gekennzeichnet, dass** der steuerbare Schalter (2) als Schalttransistor, insbesondere als MOSFET oder IGBD (insulated gate bipolar transistor), ausgeführt ist.

13. Vorrichtung (12) nach einem der Ansprüche 9 - 12, **dadurch gekennzeichnet, dass** die Vorrichtung als Regelungseinrichtung für eine Kraftstoffeinspritzung eines Kraftfahrzeugmotors ausgeführt ist, wobei mehrere Ventilstellglieder als kapazitive Elemente mit jeweils einem zugeordneten steuerbaren Schalter vorgesehen sind.

14. Vorrichtung (12) nach einem der Ansprüche 9 - 13, **dadurch gekennzeichnet, dass** die Steuerschaltung (12) mindestens ein Strommesssignal (IP) empfängt und Steuersignale (HS, LS) für mindestens einen steuerbaren Schalter erzeugt.

15. Vorrichtung (12) nach einem der Ansprüche 9 - 14, **dadurch gekennzeichnet, dass** die Steuerschaltung programmierbar ist und ein Computerprogramm nach Anspruch 8 durchführt.

## Claims

1. Method for charging a capacitive element (1) to a preset charging voltage (UP) by means of a charging current (IP), wherein a controllable switch (2) is actuated for interrupting the charging current (IP) if the charging current (IP) exceeds a predetermined current threshold (IB), and the controllable switch (2) is actuated so as to inject the charging current (IP) again if a preset time period (LZ) after a preceding actuation of the controllable switch (2) has elapsed and/or the charging current (IP) falls below the predetermined charging current threshold (IB), and wherein the charging current threshold (IB) is changed while the capacitive element (1) is charged to the preset charging voltage (UP), **characterized in that** a change in the charging current threshold (IB) takes place when the charging current (IP) increases after a first actuation of the controllable switch (2) and has fallen below the charging current threshold (IB) in the case of a subsequent second actuation of the controllable switch (2).

2. Method according to Claim 1, **characterized in that** the controllable switch (2) is actuated a plurality of times until the capacitive element (1) reaches the preset charging voltage (UP) such that the charging current (IP) exceeds and falls below the charging current threshold (IB) a plurality of times.

3. Method according to one of Claims 1 - 2, **characterized in that** the charging current threshold (IB) is changed in preset stages.

4. Method according to one of Claims 1 - 3, **characterized in that** the change in the charging current threshold (IB) takes place depending on a preset initial value (IB0) and a preset gradient (α) of the charging current threshold (IB).

5. Method according to one of Claims 1 - 4, **characterized in that** the actuation of the controllable switch (2) is repeated until a preset charging cycle time has elapsed and/or the capacitive element (1) has reached the preset charging voltage (UP).

6. Method according to one of Claims 1 - 5, **characterized in that** the preset charging voltage (UP) is lower than a present charging voltage of the capacitive element (1), wherein an absolute value of the charging current is compared with the charging current threshold and, by means of the method, pulsed discharge of the capacitive element (1) takes place.

7. Method according to one of Claims 1 - 6, **characterized in that** one or more of the following method steps are performed:
- providing a charging current by means of a charging current source (3),
- actuating the controllable switch (2) for injecting the charging current provided by the charging current source (3) into the capacitive element (1),
- generating a control signal (HS, LS) for actuating the controllable switch (2),
- detecting the charging current or discharge current,
- comparing the charging current (IP) with the charging current threshold (IB),
- detecting the time elapsed after each actuation of the controllable switch (2) as interval time (LZ),
- comparing the interval time (LZ) with a preset interval time threshold,
- detecting a charging cycle time that has elapsed,
- generating a check signal (BS).

8. Computer program which instructs a program-controlled computation device to implement a method according to one of Claims 1 - 7.

9. Device (12) for charging or discharging a capacitive element (1) to a preset charging voltage (UP) or discharge voltage by means of an injected charging current (IB) or discharge current with a control circuit (7), in particular an application-specific integrated circuit (ASIC), which implements a method according to at least one of Claims 1-7.

10. Device (12) according to Claim 9, **characterized in that** the capacitive element (1) has an actuating element, in particular a piezoelectric actuating element.

11. Device (12) according to Claim 9 or 10, **characterized in that** the controllable switch (2) has a preset switch-on and/or switch-off delay (EZ, AZ).

12. Device (12) according to one of Claims 9 - 11, **characterized in that** the controllable switch (2) is in the form of a switching transistor, in particular in the form of a MOSFET or IGBT (insulated-gate bipolar transistor).

13. Device (12) according to one of Claims 9 - 12, **characterized in that** the device is in the form of a regulation device for fuel injection of a motor vehicle engine, wherein a plurality of valve actuating elements are provided as capacitive elements, each having an associated controllable switch.

14. Device (12) according to one of Claims 9 - 13, **characterized in that** the control circuit (7) receives at least one current measurement signal (IP) and generates control signals (HS, LS) for at least one controllable switch.

15. Device (12) according to one of Claims 9 - 14, **characterized in that** the control circuit is programmable and implements a computer program according to Claim 8.

## Revendications

1. Procédé pour charger un élément capacitif (1) à une tension de charge (UP) prédéfinie au moyen d'un courant de charge (IP), un commutateur (2) commandable étant commandé pour interrompre le courant de charge (IP) dans le cas où le courant de charge (IP) dépasse un seuil de courant (IB) prédéfini et le commutateur (2) commandable étant de nouveau commandé pour injecter le courant de charge (IP) dans le cas où une période (LZ) prédéfinie s'est écoulée après une commande précédente du commutateur (2) commandable et/ou le courant de charge (IP) devient inférieur au seuil de courant de charge (IB) prédéfini, et le seuil de courant de charge (IB) étant modifié pendant que l'élément capacitif (1) est chargé à la tension de charge (UP) prédéfinie, **caractérisé en ce qu'**une modification du seuil de courant de charge (IB) a lieu lorsque le courant de charge (IP) augmente après une première commande du commutateur (2) commandable et a chuté au-dessous du seuil de courant de charge (IB) lors d'une deuxième commande postérieure à celle-ci du commutateur (2) commandable.

2. Procédé selon la revendication 1, **caractérisé en ce que** le commutateur (2) commandable est commandé plusieurs fois jusqu'à ce que l'élément capacitif (1) atteigne la tension de charge (UP) prédéfinie, de telle sorte que le courant de charge (IP) dépasse et devienne inférieur plusieurs fois au seuil de courant de charge (IB).

3. Procédé selon l'une des revendications 1 à 2, **caractérisé en ce que** le seuil de courant de charge (IB) est modifié en paliers prédéfinis.

4. Procédé selon l'une des revendications 1 à 3, **caractérisé en ce que** la modification du seuil de courant de charge (IB) s'effectue en fonction d'une valeur initiale (IB0) prédéfinie et d'une pente ascendante (α) prédéfinie du seuil de courant de charge (IB).

5. Procédé selon l'une des revendications 1 à 4, **caractérisé en ce que** la commande du commutateur (2) commandable est répétée jusqu'à ce qu'un temps de cycle de charge prédéfini se soit écoulé et/ou l'élément capacitif (1) ait atteint la tension de charge (UP) prédéfinie.

6. Procédé selon l'une des revendications 1 à 5, **caractérisé en ce que** la tension de charge (UP) prédéfinie est inférieure à une tension de charge actuelle de l'élément capacitif (1), une valeur absolue du courant de charge étant comparée avec le seuil de courant de charge et une décharge impulsionnelle de l'élément capacitif (1) étant réalisée par le procédé.

7. Procédé selon l'une des revendications 1 à 6, **caractérisé en ce qu'**une ou plusieurs des étapes suivantes sont exécutées :
- délivrance d'un courant de charge par une source de courant de charge (3),
- commande du commutateur (2) commandable en vue d'injecter le courant de charge délivré par la source de courant de charge (3) dans l'élément capacitif (1),
- génération d'un signal de commande (HS, LS) pour commander le commutateur (2) commandable,
- détection du courant de charge ou du courant de décharge,
- comparaison du courant de charge (IP) avec le seuil de courant de charge (IB),
- détection du temps écoulé à partir de chaque commande du commutateur (2) commandable en tant que temps d'intervalle (LZ),
- comparaison du temps d'intervalle (LZ) avec un seuil de temps d'intervalle prédéfini,
- détection d'un temps de cycle de charge écoulé,
- génération d'un signal de contrôle (BS).

8. Programme informatique qui commande un calculateur programmable en vue de la mise en oeuvre d'un procédé selon l'une des revendications 1 à 7.

9. Dispositif (12) pour charger ou décharger un élément capacitif (1) à une tension de charge (UP) prédéfinie ou à une tension de décharge au moyen d'un courant de charge (IB) ou d'un courant de décharge injecté, comprenant un circuit de commande (7), notamment un circuit intégré spécifique à l'application (ASIC), lequel met en oeuvre un procédé selon au moins l'une des revendications 1 à 7.

10. Dispositif (12) selon la revendication 9, **caractérisé en ce que** l'élément capacitif (1) présente un actionneur, notamment un actionneur piézoélectrique.

11. Dispositif (12) selon la revendication 9 ou 10, **caractérisé en ce que** le commutateur (2) commandable présente un retard à la mise sous tension et/ou à la mise hors tension (EZ, AZ) prédéfini.

12. Dispositif (12) selon l'une des revendications 9 à 11, **caractérisé en ce que** le commutateur (2) commandable est réalisé sous la forme d'un transistor de commutation, notamment d'un MOSFET ou d'un IGBT (insulated gate bipolar transistor - transistor bipolaire à gâchette isolée).

13. Dispositif (12) selon l'une des revendications 9 à 12, **caractérisé en ce que** le dispositif est réalisé sous la forme d'un appareil de régulation pour une injection de carburant d'un moteur de véhicule automobile, plusieurs actionneurs de soupape sous la forme d'éléments capacitifs étant prévus avec respectivement un commutateur commandable associé.

14. Dispositif (12) selon l'une des revendications 9 à 13, **caractérisé en ce que** le circuit de commande (7) reçoit au moins un signal de mesure de courant (IP) et génère des signaux de commande (HS, LS) pour au moins un commutateur commandable.

15. Dispositif (12) selon l'une des revendications 9 à 14, **caractérisé en ce que** le circuit de commande est programmable et exécute un programme informatique selon la revendication 8.
